(19) **Europäisches Patentamt / European Patent Office / Office européen des brevets**

(11) **EP 4 667 101 A1**

(12) # EUROPEAN PATENT APPLICATION

(43) Date of publication:
24.12.2025   Bulletin 2025/52

(51) International Patent Classification (IPC):
*B01L 3/00* (2006.01)

(21) Application number: 25182617.8

(22) Date of filing: **13.06.2025**

(52) Cooperative Patent Classification (CPC):
**B01L 3/502761;** B01L 2200/0642; B01L 2200/0668;
B01L 2300/0893; B01L 2400/049

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.06.2024   JP 2024098525**

(71) Applicant: **CANON KABUSHIKI KAISHA
Tokyo 146-8501 (JP)**

(72) Inventors:
• **BABA, Kyoko**
**Tokyo (JP)**
• **TORII, Sota**
**Tokyo (JP)**
• **SASAGURI, Daisuke**
**Tokyo (JP)**
• **ABE, Shigemoto**
**Tokyo (JP)**

(74) Representative: **WESER & Kollegen
Patentanwälte PartmbB
Radeckestraße 43
81245 München (DE)**

(54) **FILLING METHOD AND FILLING SYSTEM**

(57)   Provided is a filling method for filling a microwell (404) with a target-capturing substance, the filling method including: a capturing substance information acquisition step of acquiring capturing substance information relating to a target-capturing substance to be used; a speed determination step of determining, based on the capturing substance information acquired in the capturing substance information acquisition step, an introduction speed at which a dispersion medium in which the target-capturing substance is dispersed is introduced to a region on a base material in which a plurality of the microwells (404) are formed, the region including the plurality of the microwells (404) formed therein; and a capturing substance filling step of filling one or more of the plurality of the microwells (404) with the target-capturing substance by introducing the dispersion medium to the base material at the introduction speed.

## FIG. 2

```
        START
          |
S201  ACQUIRE CAPTURING
      SUBSTANCE INFORMATION
          |
S202  DETERMINE INTRODUCTION SPEED
          |
S203  FILL MICROWELL WITH
      TARGET-CAPTURING SUBSTANCE
          |
         END
```

EP 4 667 101 A1

**Description**

TECHNICAL FIELD

The present disclosure relates to a filling method and a filling system which are used for detection using a microwell.

BACKGROUND

Rapid and accurate detection of a target substance in a sample is important in the fields of, for example, medical diagnosis and academic research. For example, in the medical field, a target substance is detected from the amount of a signal emitted by a reporter in an antibody-based assay to measure a concentration of the target substance. In recent years, there has been developed, as in Japanese Patent Application No. 2012-556164, a high sensitivity measurement method in which, after a detection reagent including a reporter is fed into microwells and then the microwells are isolated by a hydrophobic solvent, a reaction is detected with a fluorescent microscope or the like.

There has also been developed a measurement method that uses a target-capturing substance as a method of filling microwells with a target substance more efficiently.

SUMMARY

With related-art detection methods, there is room for improvement in terms of detection sensitivity.

The present disclosure in its first aspect provides a filling method as specified in claim 1. Optional features are specified in claims 2 to 7.

The present disclosure in its second aspect provides a detection method as specified in claim 8. Optional features are specified in claims 9 and 10.

The present disclosure in its third aspect provides a filling system as specified in claim 11.

The present disclosure in its fourth aspect provides a detection system as specified in claim 12. Optional features are specified in claims 13 and 14.

According to the present disclosure, the filling method and the filling system which enable a microwell to be filled with a target-capturing substance with high efficiency are provided.

Further features of the present disclosure will become apparent from the following description of embodiments with reference to the attached drawings. The following description of embodiments are described by way of example.

BRIEF DESCRIPTION OF THE DRAWINGS

Fig. 1 is a functional block diagram of a filling system according to a first embodiment of the present disclosure.
Fig. 2 is a flow chart for illustrating an outline of a filling method according to the first embodiment of the present disclosure.
Fig. 3 is a block diagram for illustrating a hardware configuration example of the filling system according to the first embodiment of the present disclosure.
Fig. 4 is a cross-sectional view for illustrating an example of a well plate.
Fig. 5 is a functional block diagram of a filling system according to a modification example of the first embodiment of the present disclosure.
Fig. 6 is a flow chart for illustrating an outline of a filling method according to the modification example of the first embodiment of the present disclosure.
Fig. 7 is a functional block diagram of a filling system according to a modification example of the first embodiment of the present disclosure.
Fig. 8 is a flow chart for illustrating an outline of a filling method according to another modification example of the first embodiment of the present disclosure.
Fig. 9 is a functional block diagram of a detection system according to a second embodiment of the present disclosure.
Fig. 10 is a flow chart for illustrating an outline of a detection method according to the second embodiment of the present disclosure.
Fig. 11 is a diagram for showing an example of an image obtained by photographing a result of filling microwells formed in a base material with a target-capturing substance.

DESCRIPTION OF THE EMBODIMENTS

According to an investigation conducted by the inventors of the present disclosure, with the related-art detection methods, in filling microwells with a target-capturing substance, the number of target substances that can be detected may be reduced due to a low filling efficiency or a narrow uniformly micro-compartmented area, resulting in lowered detection sensitivity. In addition, uneven filling of the microwells with the target-capturing substance sometimes occurs, resulting in a failure to obtain an appropriate detection result.

In view of the above, the present disclosure aims to provide a filling method and a filling system which enable a microwell to be filled with a target-capturing substance with high efficiency. Now, details thereof are described.

In a detection method in which a target substance is detected by sealingly containing the target substance in microwells through use of a target-capturing substance, a dispersion medium in which the target-capturing substance is dispersed is introduced onto a base material in which the microwells are formed. Subsequently, in a process in which the dispersion medium moves on the base material, the microwells formed on the base material are sequentially filled with the target-capturing substance.

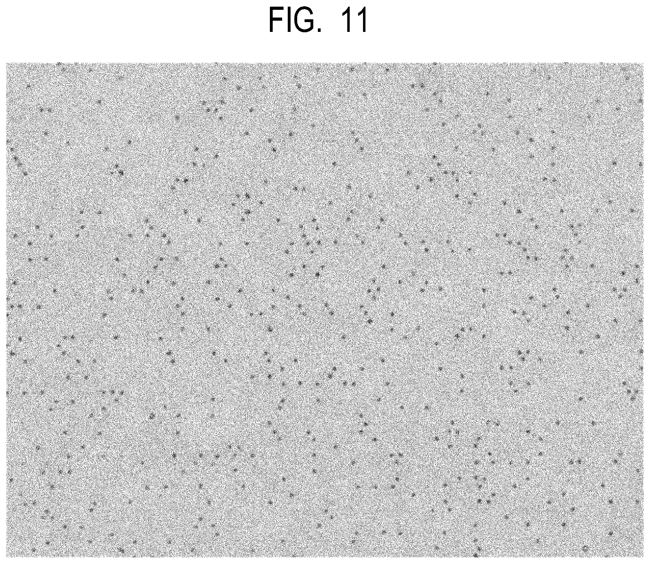

Fig. 11 shows an example of an image obtained by photographing a result of filling the microwells formed in the base material with the target-capturing substance.

When the microwells are appropriately filled with the target-capturing substance, the target-capturing substance dispersed in the dispersion medium spreads over the base material together with the dispersion medium, and as shown in Fig. 11, the target-capturing substance is dispersed almost uniformly in each of a plurality of microwells formed on the base material to fill each of the plurality of microwells.

According to an investigation conducted by the inventors of the present disclosure, with the related-art detection methods that use microwells, when the dispersion medium in which the target-capturing substance is dispersed is introduced onto the base material, the target-capturing substance aggregates and deposits outside the microwells in some cases. Aggregation of the target-capturing substance and deposition of the target-capturing substance outside the microwells contribute to a reduction in the number of target-capturing substances filling the microwells and to inhibition of a flow of the dispersion medium.

As a result of a further investigation conducted by the inventors, the inventors have found that, through appropriate control of an introduction speed of the dispersion medium onto the base material, a filling efficiency at which the microwells are filled with the target-capturing substance can be increased, a uniformly micro-compartmented area can be increased, and further, uneven filling can be suppressed.

Exemplary embodiments of the present disclosure are now described in detail with reference to the drawings. However, components described in the embodiments are merely an example. The technical scope of the present disclosure is defined by the appended claims, and is not limited by the embodiments to be described below. Like elements or corresponding elements are denoted by the same reference numerals in the drawings, and description thereof may be omitted or simplified.

[First Embodiment]

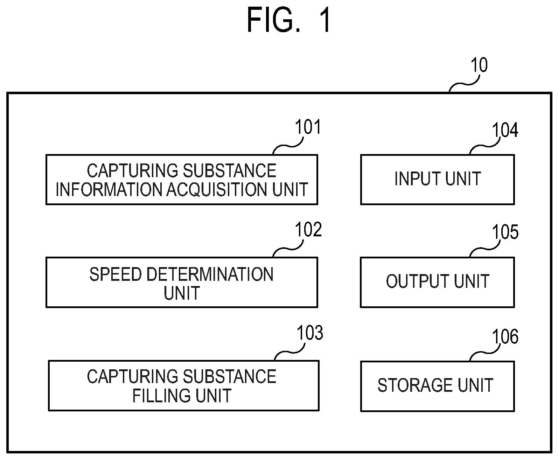

Fig. 1 is a functional block diagram of a filling system according to a first embodiment of the present disclosure. A filling system 10 according to the first embodiment is a filling system for filling a microwell with a target-capturing substance. The filling system 10 includes a capturing substance information acquisition unit 101, a speed determination unit 102, a capturing substance filling unit 103, an input unit 104, an output unit 105, and a storage unit 106.

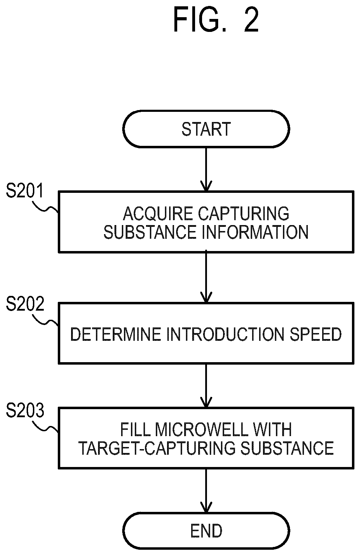

A filling method according to the first embodiment of the present disclosure, which is executed through use of the filling system 10 illustrated in Fig. 1, is described. Fig. 2 is a flow chart for illustrating an outline of the filling method according to the first embodiment of the present disclosure.

First, in a capturing substance information acquisition step of Step S201, the capturing substance information acquisition unit 101 acquires capturing substance information relating to a target-capturing substance to be used.

The capturing substance information includes information related to a factor that may affect filling of microwells. The capturing substance information may include information about a dispersion medium in which the target-capturing substance to be used is dispersed.

As described above, the target-capturing substance dispersed in the dispersion medium spreads over a base material together with the dispersion medium to fill each of the microwells formed on the base material. At this time, the behavior of the target-capturing substance in the dispersion medium differs depending on the types of the target-capturing substance to be used and the dispersion medium. In the present disclosure, information about an element that affects the behavior of the target-capturing substance in the dispersion medium is acquired as the capturing substance information.

The capturing substance information includes, for example, substance characteristic information relating to a characteristic of a substance that is at least any one of the target-capturing substance or the dispersion medium. The substance characteristic information may be a physical property value of at least any one of the target-capturing substance or the dispersion medium that affects a sedimentation speed of the target-capturing substance in the dispersion medium.

Specific examples of the characteristic about the target-capturing substance can include a value relating to a size of the target-capturing substance, such as a volume and a diameter thereof, a mass thereof, and a concentration thereof in the dispersion medium. Specific examples of the characteristic about the dispersion medium can include a viscosity.

The capturing substance information may include specification information for specifying a substance that is at least any one of the target-capturing substance or the dispersion medium. Specific examples of the specification information can include a product name, a generic name of the substance, a chemical substance name, a code for identifying a chemical substance, a structural formula, and a composition or analytical data indicating a composition.

There may be two types of methods of acquiring the capturing substance information: automatic acquisition and manual acquisition. In the case of the automatic acquisition, the following method may be adopted, for example. Specifically, the filling system 10 further includes, for example, a capturing substance image acquisition unit which acquires an image of the target-capturing substance, and an image analysis unit which analyzes the image acquired by the capturing substance image acquisition unit, and the capturing substance information is automatically acquired based on a result obtained by the image analysis unit. In the case of the manual acquisition, the following method may be adopted, for example. Specifically, a user selects, through input from the input unit 104, the capturing substance information from among specific options of the capturing substance information presented by the filling system 10 on the output unit 105 which are displayed as, for example, "target-capturing substance A, target-capturing substance B, and target-capturing substance C."

The capturing substance information acquisition unit 101 may acquire the capturing substance information from the storage unit 106, or may acquire the capturing substance information from an external server or the like. The capturing substance information acquisition unit 101 may acquire, as an analysis result, the capturing substance information directly from a functional part which performs particular analysis, as in the above-mentioned example.

Subsequently, in a speed determination step of Step S202, the speed determination unit 102 determines, based on the capturing substance information acquired in the capturing substance information acquisition step, an introduction speed at which the dispersion medium is introduced to a region on the base material in which the microwells are formed.

In the present disclosure, the introduction speed of the dispersion medium onto the base material is determined to be an appropriate value based on the capturing substance information, thereby enabling highly efficient filling of the microwells with the target-capturing substance.

An example of a relationship between the substance characteristic information relating to the characteristic about the target-capturing substance, which is included in the capturing substance information, and control of the introduction speed of the dispersion medium onto the base material is shown in Table 1. Further, an example of a relationship between the substance characteristic information relating to the characteristic about the dispersion medium, which is included in the capturing substance information, and control of the introduction speed of the dispersion medium onto the base material is shown in Table 2.

Table 1

| Substance Characteristic Information (Target-capturing Substance) | Diameter | | Mass | | Concentration in Dispersion Medium | |
|---|---|---|---|---|---|---|
| | Large | Small | Large | Small | High | Low |
| Introduction Speed | Decreased | Increased | Increased | Decreased | Increased | Decreased |

Table 2

| Substance Characteristic Information (Dispersion Medium) | Viscosity | |
|---|---|---|
| | High | Low |
| Introduction Speed | Increased | Decreased |

For example, when the diameter of the target-capturing substance is relatively large, it is considered difficult for the target-capturing substance to enter the microwells, and hence a relatively slow introduction speed is determined in the speed determination step. Further, for example, when the mass of the target-capturing substance is relatively small, a speed at which the target-capturing substance sediments in the dispersion medium is slow, and hence a relatively slow introduction speed is determined in the speed determination step. Still further, for example, when the concentration of the target-capturing substance in the dispersion medium is relatively high, the target-capturing substance is in a high-density state in the dispersion medium and is thus likely to aggregate, and hence a relatively fast introduction speed is determined in the speed determination step. Yet further, for example, when the viscosity of the dispersion medium is relatively high, it is difficult for the dispersion medium to flow, and hence a relatively fast introduction speed is determined in the speed determination step.

In the speed determination step, there is no particular limitation on a specific method of determining the introduction speed based on the capturing substance information. When a specific introduction speed is to be determined, for example, a value obtained through calculation by using the following equation (Stokes' law) from the capturing substance information may be referred to.

$$v_s = \frac{D_p{}^2(\rho_p - \rho_f)g}{18\eta} \qquad (1)$$

In the equation given above, $v_s$ represents a terminal velocity [m/s], $D_p$ represents the diameter [m] of the target-capturing substance, $\rho_p$ represents a density [kg/m$^3$] of the target-capturing substance, $\rho_f$ represents a density [kg/m$^3$] of the dispersion medium, "g" represents the gravitational acceleration [m/s$^2$], and $\eta$ represents the viscosity [Pa·s] of the dispersion medium.

For example, it can be determined that, by increasing the introduction speed of the dispersion medium with a fast terminal velocity of the target-capturing substance calculated through use of the equation given above, the microwells are efficiently filled with the target-capturing substance.

Further, for example, when an introduction speed that is appropriate for the type of the target-capturing substance, a combination of the target-capturing substance and the dispersion medium, or the like is known, an appropriate introduction speed may be determined in the speed determination step based on the specification information acquired as the capturing substance information.

There may be two types of methods of determining the introduction speed: automatic determination and manual determination. In the case of the automatic determination, for example, the filling system 10 automatically determines the introduction speed. In the case in which the introduction speed is manually determined, there may be a plurality of determination methods. For example, the user may select, through input from the input unit 104, one of speed conditions such as "fast, medium, and slow" presented by the filling system 10 through the output unit 105, and an introduction speed that is optimal for each target-capturing substance may be considered as appropriate based on a filling result. The filling system 10 may determine an optimal introduction speed based on the capturing substance information input to the filling system 10 by the user.

Subsequently, in a capturing substance filling step of Step S203, the capturing substance filling unit 103 fills one or more microwells with the target-capturing substance by introducing the dispersion medium to the base material at the introduction speed determined in the speed determination step.

Specific examples of a method of introducing the dispersion medium to the base material by the capturing substance filling unit 103 can include a method in which an instrument capable of feeding liquid, such as a micropipette or a syringe, is used to directly pour the liquid of the dispersion medium from an injection port portion of a channel formed in the base material. Filling may also be achieved by a method in which the dispersion medium is dropped into the injection port portion and the dispersion medium is suctioned from a discharge port portion or a centrifugal force is applied to the base material. It is preferred at this time that the dispersion medium in which the target-capturing substance is dispersed be introduced so as to cover all the microwells.

Now, the distribution of the target-capturing substance to the microwells is described.

When the target-capturing substance is distributed to the microwells, it is preferred that the base material in which the microwells are formed be left to stand under reduced pressure to degas a space above a region on the base material in which the microwells are formed. Specific examples of such degassing include a method involving leaving the base material in a vacuum desiccator of 0.1 atm for a predetermined time period. Through degassing, the air in the microwells is removed, to thereby be able to efficiently fill the microwells with the dispersion medium in which the target-capturing substance is dispersed.

A degassing time period is not particularly limited, and can be freely set. The method of filling the microwells with the dispersion medium is not limited to a method based on the degassing.

Next, a sealing medium is introduced to the space above the region on the base material in which the microwells are formed to seal the microwells. That is, the dispersion medium that exists in the space above the microwells is substituted with the sealing medium.

Now, an example of a hardware configuration of the filling system according to the first embodiment is described.

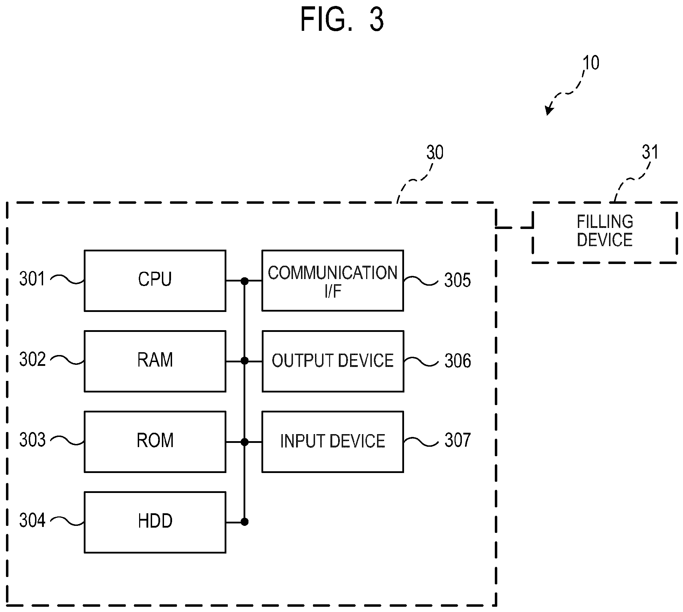

Fig. 3 is a block diagram for illustrating a hardware configuration example of the filling system according to the first embodiment.

The filling system 10 includes an information processing device 30 and a filling device 31.

The information processing device 30 has functions of a computer. For example, the information processing device 30 may be configured unitarily with a desktop personal computer (PC), a laptop PC, a tablet PC, a smartphone, or the like.

The information processing device 30 includes, in order to implement functions as a computer that performs arithmetic operation and storage, a central processing unit (CPU) 301, a random-access memory (RAM) 302, a read-only memory (ROM) 303, and a hard disk drive (HDD) 304. The information processing device 30 also includes a communication interface (I/F) 305, an output device 306, and an input device 307. The CPU 301, the RAM 302, the ROM 303, the HDD 304, the communication I/F 305, the output device 306, and the input device 307 are connected to each other via a bus. The output device 306 and the input device 307 may be connected to the bus via a drive device (not shown) for driving those devices.

In Fig. 3, the various components forming the information processing device 30 are illustrated as an integrated device, but part of the functions of those components may be implemented by an external device. For example, the output device 306 and the input device 307 may be external devices different from the components implementing the functions of the computer including the CPU 301 and the like.

The CPU 301 performs predetermined operations in accordance with programs stored in, for example, the RAM 302 and the HDD 304, and also has a function of controlling each component of the information processing device 30. Examples of processing to be executed by the CPU can include acquisition of the capturing substance information, determination of the introduction speed, and image analysis.

The RAM 302 is built from a volatile storage medium, and provides a temporary memory area required for the operations of the CPU 301. The ROM 303 is built from a non-volatile storage medium, and stores required information such as programs to be used for the operations of the information processing device 30.

The HDD 304 is a storage device which is built from a non-volatile storage medium, and which stores the capturing substance information and the like.

The communication I/F 305 is a communication interface based on a standard, such as Wi-Fi (trademark) or 4G, and is a module for communicating to and from another apparatus including the filling device. The output device 306 may be used for displaying moving images, still images, characters, and the like as a display device, for example, a liquid crystal display or an organic light emitting diode (OLED) display. The input device 307 is, for example, a button, a touch panel, a keyboard, or a pointing device, and is used by a user to operate the information processing device 30. The output device 306 and the input device 307 may be integrally formed as a touch panel.

The filling device 31 is an apparatus for filling the microwells with the target-capturing substance by introducing the dispersion medium onto the base material. The filling device 31 may include, for example, a member to be used for feeding liquid, such as a micropipette or a syringe, and a mechanism which supplies motive power for feeding the dispersion medium from the member to be used for feeding liquid. The filling device 31 may also include, for example, a mechanism for degassing the space above the base material.

The hardware configuration illustrated in Fig. 3 is an example, and devices other than the illustrated devices may be added, or part of the illustrated devices may be omitted. In addition, part of the devices may be substituted with another device having the same function. Further, part of the functions may be provided by another device via a network, and the functions for implementing the first embodiment may be implemented by a plurality of devices in a distributed manner. For example, the HDD 304 may be substituted with a solid state drive (SSD) using a semiconductor element such as a flash memory, or may be substituted with cloud storage.

Now, materials to be used for the filling method according to the first embodiment are described in further detail.

<Microwell>

Each of the microwells refers to an independently separated compartment. A volume of the compartment is preferred to be minute, and the volume is preferred to be 0.1 fL or more and 1,000 fL or less. Preferred examples of the microwell can include a minute hole formed in a top surface of the base material.

<Well Plate>

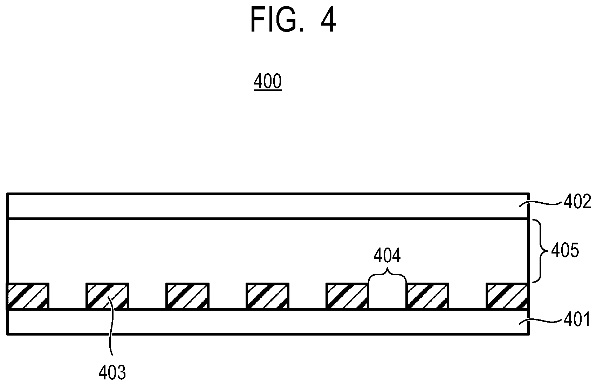

Preferred examples of a member including the base material in which the microwells are formed can include a well plate. An example of the well plate is illustrated in Fig. 4.

Fig. 4 is a cross-sectional view of a well plate 400. The well plate 400 includes a base material, which is formed of a lower substrate 401 and partition walls 403, and an upper substrate 402, and microwells 404 are formed in a top surface of the base material.

The microwells 404 are recesses for accommodating a dispersion medium, and are separated from each other by the partition walls 403. The microwells 404 can use the lower substrate 401 as bottom surfaces thereof, and a shape of a region surrounded by the bottom surface and side surfaces of each of the microwells 404 may be, for example, a columnar shape or a prismatic shape. When the shape of each of the microwells 404 is a columnar shape having a circular bottom surface, it is preferred that a diameter of the bottom surface of each of the microwells 404 be 0.5 $\mu$m or more and 12 $\mu$m or

less, and a depth of each of the microwells 404 be 0.5 $\mu$m or more and 12 $\mu$m or less. In addition, it is further preferred that the diameter of the bottom surface of each of the microwells 404 be 1 $\mu$m or more and 9 $\mu$m or less, and the depth of each of the microwells 404 be 1 $\mu$m or more and 9 $\mu$m or less. It is preferred that the upper substrate 402 be opposed to openings of the microwells 404 and top surfaces of the partition walls 403 across a space 405. The space 405 serves as a channel through which a fluid such as the dispersion medium and the sealing medium flows, and the fluid such as the dispersion medium and the sealing medium can flow from an injection port portion (not shown) toward a discharge port portion. As the well plate 400, a commercially available material such as a Simoa (trademark) disc manufactured by Quanterix Corporation may be used, or the well plate 400 may be manufactured.

<Target-capturing Substance>

Examples of the target-capturing substance can include a particle. The particle may be bound with an antibody or the like in order to capture the target. Specific examples of the particle can include a polymer resin (styrene resin, acrylic resin, or the like) particle, a silica particle, an agarose carrier resin particle, a metal particle, a latex particle, and a magnetic particle. The use of the target-capturing substance enables the target to be separated through use of centrifugation or magnetism. As the target-capturing substance, a particle having a particle diameter of 1 $\mu$m or more and 10 $\mu$m or less can be preferably used.

<Dispersion Medium>

The dispersion medium can be selected as appropriate for use from a variety of media so as to suit the target-capturing substance to be used. Among such media, a hydrophilic liquid medium can be suitably used as the dispersion medium in many cases. Examples of the hydrophilic liquid medium to be used as the dispersion medium can include at least one selected from the group consisting of water, a hydrophilic alcohol, a hydrophilic ether, a ketone, a nitrile-based solvent, dimethyl sulfoxide, and N,N-dimethylformamide, and a mixture containing those media. Examples of the hydrophilic alcohol can include ethanol, methanol, propanol, and glycerin. Examples of the hydrophilic ether can include tetrahydrofuran, polyethylene oxide, and 1,4-dioxane. Examples of the ketone can include acetone and methyl ethyl ketone. Examples of the nitrile-based solvent can include acetonitrile.
The dispersion medium may further include a buffer, a surfactant, and the like.

<Sealing Medium>

A hydrophobic liquid medium can be suitably used as the sealing medium in many cases. Specific examples to be used as the sealing medium can include a fluorine-based oil, a saturated aliphatic hydrocarbon, an unsaturated aliphatic hydrocarbon, an aromatic hydrocarbon, and a silicone oil. Examples of the fluorine-based oil can include Fluorinert, AsahiKlin AE-3000 (manufactured by AGC Inc.), and Fomblin (manufactured by Solvay S.A.). Examples of the saturated hydrocarbon can include Isopar (manufactured by Exxon Mobil Corporation) and a mineral oil.

[First Modification Example of First Embodiment]

Now, a first modification example of the first embodiment of the present disclosure described above is described.

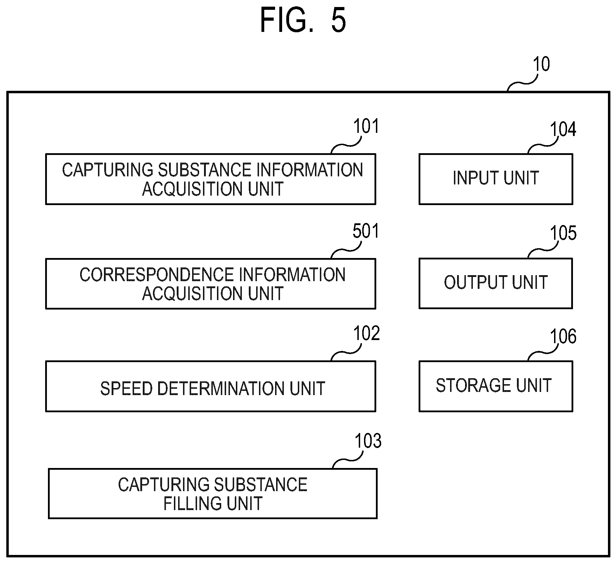

Fig. 5 is a functional block diagram of a filling system according to the first modification example of the first embodiment. The filling system 10 according to the first modification example further includes a correspondence information acquisition unit 501 in addition to the components described in the first embodiment.

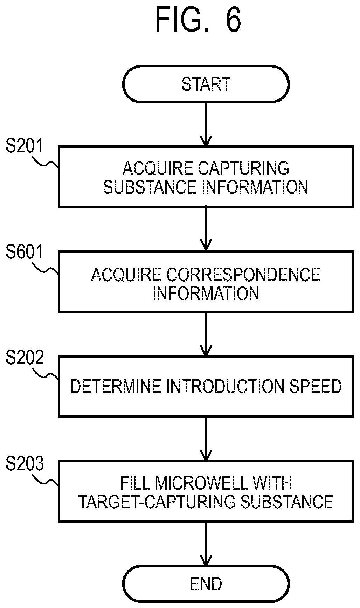

Fig. 6 is a flow chart for illustrating an outline of a filling method according to the first modification example of the first embodiment.
In the filling method according to the first modification example, in a correspondence information acquisition step of Step S601, the correspondence information acquisition unit 501 acquires correspondence information relating to a correspondence relationship between the capturing substance information and speed index information. In this case, the capturing substance information relating to the correspondence relationship is the capturing substance information about one or more target-capturing substances including the target-capturing substance to be used. The speed index information is information relating an index for determining the introduction speed at which the dispersion medium in which the target-capturing substance is dispersed is introduced to a region on the base material in which a plurality of microwells are formed, the region including the microwells formed therein.
The speed index information may be information that only indicates the direction of a preferred change from a predetermined initial value for the introduction speed, for example, making the introduction speed faster or slower than the predetermined initial value. Alternatively, the speed index information may be information that includes, for example, a recommended value for a degree of change in addition to the direction of change from a predetermined initial value for the introduction speed. Still alternatively, the speed index information may be information that includes a recommended value for a specific introduction speed corresponding to the capturing substance information.

In the capturing substance filling step of Step S203, when there are a plurality of modes of introducing the dispersion medium onto the base material, the degree of influence of each element of the capturing substance information on the filling of the microwells with the target-capturing substance may differ depending on the mode of introducing the dispersion medium onto the base material. Thus the above-mentioned correspondence information may be prepared for each mode of introduction.

Subsequently, in the speed determination step of Step S202, the speed determination unit 102 refers to the correspondence information acquired by the correspondence information acquisition unit 501 at the time of determining the introduction speed.

The introduction speed can be determined more easily by referring to the correspondence information in the speed determination step as in the first modification example.

[Second Modification Example of First Embodiment]

Next, a second modification example of the first embodiment of the present disclosure described above is described.

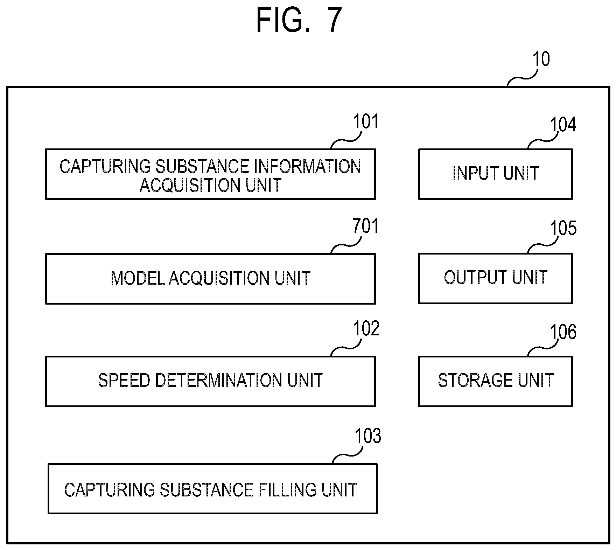

Fig. 7 is a functional block diagram of a filling system according to the second modification example of the first embodiment. The filling system 10 according to the second modification example further includes a model acquisition unit 701 in addition to the components described in the first embodiment.

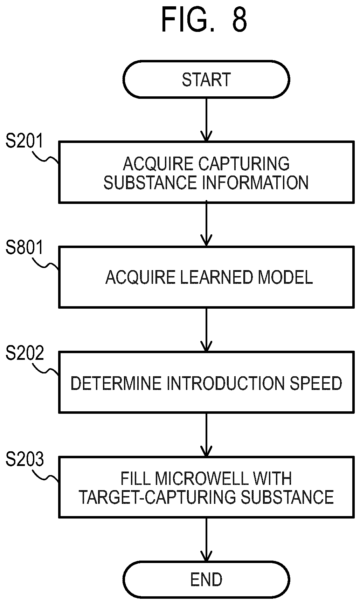

Fig. 8 is a flow chart for illustrating an outline of a filling method according to the second modification example of the first embodiment.

In the filling method according to the second modification example, in a model acquisition step of Step S801, the model acquisition unit 701 acquires a learned model. The learned model acquired by the model acquisition unit 701 in this case is a machine learning model that has been trained to output, when the capturing substance information is input thereto, a recommended value of the introduction speed of the dispersion medium onto the base material with which a predetermined filling efficiency is obtained. There is no particular limitation on the type of machine learning model to be used for training and the method of training, and a publicly known machine learning model and training method can be used. For example, the learned model may be updated so that the learned model can output an optimal introduction speed each time through machine learning by analyzing images of past filling results and providing feedback.

Also in the second modification example, in the capturing substance filling step of Step S203, when there are a plurality of modes of introducing the dispersion medium onto the base material, the above-mentioned learned model may be prepared for each mode of introduction. As another example, the above-mentioned learned model may be a model that has been trained to output, when the mode of introduction of the dispersion medium is input thereto in addition to the capturing substance information, a recommended value of the introduction speed with which a predetermined filling efficiency is obtained.

Subsequently, in the speed determination step of Step S202, the speed determination unit 102 determines the introduction speed by referring to the recommended value of the introduction speed that has been output from the learned model acquired by the model acquisition unit 701 after the capturing substance information acquired in Step S201 is input thereto.

The introduction speed can be determined more easily by referring to the recommended value of the introduction speed that has been output through use of the learned model in the speed determination step as in the second modification example.

[Second Embodiment]

As a second embodiment of the present disclosure, an example of a detection method for a target molecule, which uses the filling method described in the first embodiment, is described.

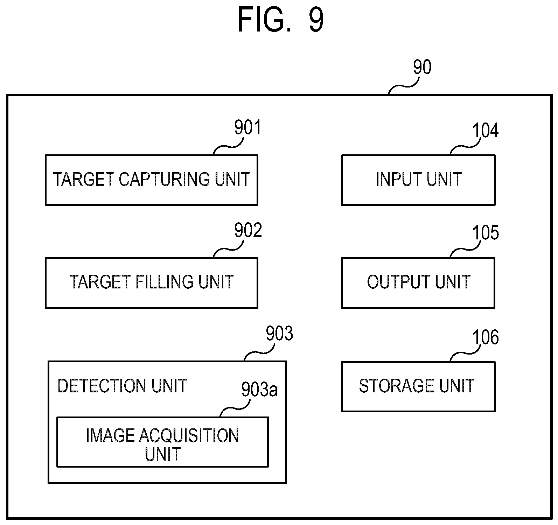

Fig. 9 is a functional block diagram of a detection system according to the second embodiment of the present disclosure. A detection system 90 according to the second embodiment includes a target capturing unit 901, a target filling unit 902, a detection unit 903, the input unit 104, the output unit 105, and the storage unit 106. The detection unit 903 includes an image acquisition unit 903a.

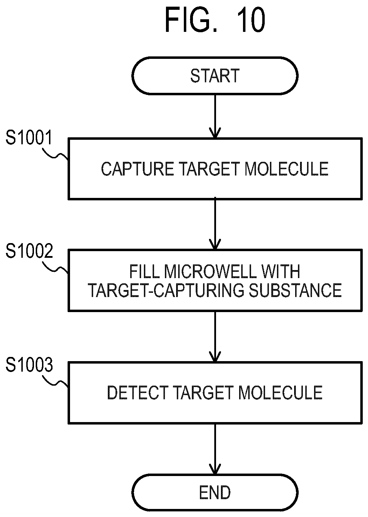

The detection method according to the second embodiment, which is executed through use of the detection system 90 illustrated in Fig. 9, is described. Fig. 10 is a flow chart for illustrating an outline of the detection method according to the second embodiment of the present disclosure.

The detection method according to the second embodiment is related to a method of detecting, after a specimen including a target molecule is distributed to a plurality of microwells, the target molecule in the microwells.

When the specimen including the target molecule is distributed to the microwells, the sample is apparently brought into a concentrated state, and it is possible to detect the target molecule without performing an amplification step and shorten a time period for signal saturation. A volume per compartment of the microwells can be sufficiently reduced to set the target molecule included in one compartment to one molecule or less, and it is possible to perform a digital assay for calculating a concentration of the target molecule of the specimen by counting the number of compartments from which signals are obtained.

In the detection method according to the second embodiment, first, in a target capturing step of Step S1001, the target capturing unit 901 performs an operation for causing the target-capturing substance to capture the target molecule in the dispersion medium. Specifically, for example, the target capturing step includes a step for an operation of mixing the dispersion medium in which the target-capturing substance is distributed and the sample including the target molecule to be detected.

The target molecule may be any of various substances without limitation. Specific examples of the target molecule can include a protein, a nucleic acid, a lipid, a sugar, a low-molecular-weight compound, an enzyme, a ligand, a receptor, an antibody, an antigen, a cytokine, a hormone, and a membrane protein.

The target capturing step may also include a step for an operation for promoting an association of the target-capturing substance and the target molecule in addition to the operation of mixing the dispersion medium and the sample. Examples of such an operation can include heating and shaking. The target capturing step may also include a step for an operation of adding an additive for initiating or promoting the association of the target-capturing substance and the target molecule to a mixture (mixture liquid) of the dispersion medium and the sample. The target capturing step may further include a step for an operation of adding a reagent for detection (detection reagent) to the mixture (mixture liquid) of the dispersion medium and the sample.

It is not required for the detection system 90 to include the target capturing unit 901. That is, the operation in the target capturing step is not limited to being performed automatically, and may be performed manually by the user.

Subsequently, in a target filling step of Step S1002, the microwells are filled with the target-capturing substance by the filling method described in the first embodiment. The detection system 90 may include, for example, a placement portion on which the base material in which the microwells are formed is to be placed, and the dispersion medium may be introduced to the base material placed on the placement portion in accordance with the filling method described in the first embodiment.

The microwells can include a detection reagent, and the sample including the target molecule may include a detection reagent. The detection reagent is preferred to exhibit a signal through interaction with the target molecule.

Any publicly known substance can be used as the detection reagent without limitation. For example, when the target molecule is a nucleic acid and a CRISPR-Cas system is used, it is possible to use, as the detection reagent, an effector protein, crRNA to be bound to a target nucleic acid, and a reporter molecule. That is, the crRNA is bound to the target nucleic acid to activate the effector protein, and the reporter molecule is modified by the activated effector protein to generate fluorescence as a signal. When the target molecule is a nucleic acid, without limitation to the above-mentioned system, it is possible to use various probes that each exhibit a signal in accordance with presence or an amount of the target nucleic acid.

Examples of the detection reagent for a case in which the target molecule is a protein can include an antibody, a modified antibody, a ligand, and an aptamer, and those can be labeled with a fluorescent dye, an enzyme, or the like to generate a signal. In another case, when the target molecule is an enzyme, an enzyme substrate can be used as the detection reagent. The enzyme substrate may be labeled with a fluorescent dye and modified by the substrate to generate fluorescence as a signal.

When the target molecule per microwell is set to one molecule or less, an effective digital assay is enabled. In another case, in a case of using a target-capturing substance, when the number of target molecules per target-capturing substance is set to one molecule or less, the same effect is obtained, thereby enabling a digital assay.

Subsequently, in a detection step of Step S1003, the detection unit 903 detects the target molecule based on a signal emitted through use of the target-capturing substance that has captured the target molecule.

Signal generation is described. In the microwells to which the specimen including the target molecule has been distributed, a reaction for generating a signal to be used for detection of the target molecule may be performed in the detection step.

For example, in the case of using a CRISPR-Cas system described above, the base material in which the microwells are formed is incubated at 37°C. Through this incubation, a trans-cleavage reaction of CRISPR-Cas progresses, and fluorescence derived from a fluorescent substance possessed by the reporter molecule is generated. In the example of using an enzyme as the target molecule, the reaction is progressed at a temperature optimal for the enzyme, to thereby be able to perform the signal generation.

The method of detecting the target molecule based on a signal caused by the reaction between the target-capturing substance filling the microwells and the target molecule is described. In the second embodiment, a method that uses image pickup to acquire signal information is described.

In the second embodiment, the detection unit 903 includes the image acquisition unit 903a, and the image acquisition unit 903a acquires, in an image acquisition step included in the detection step, an image obtained by photographing a plurality of the microwells. The image acquisition unit 903a may acquire an image obtained by photographing the microwells through use of an imaging device different from one included in the detection system 90, and the image acquisition unit 903a may include an imaging device.

The term "image" includes all pieces of information included in an image, for example, includes all kinds of information such as a brightness, a color, and a tone for each set of coordinates, and an image acquisition unit can acquire required information among all those kinds of information. The image may be obtained through extraction. In the image, an entire base material or an entire well plate may be used as the object, or part of the base material or part of the well plate may be used as the object.

The image acquired by the image acquisition unit 903a may be an image that is at least any one of a bright-field image or a fluorescent image.

An example of signal detection in the detection step in a case in which the image acquired by the image acquisition unit 903a is, for example, a fluorescent image is described. For example, in the above-mentioned example in which the target molecule is an enzyme, fluorescence is generated as a result of an enzyme reaction, and the fluorescence accumulates in a relevant microwell. The image acquisition unit 903a acquires an image obtained by photographing the accumulated fluorescence by an imaging device such as a microscope or a CCD camera. Subsequently, the acquired image is analyzed to detect a signal caused by the reaction between the target-capturing substance filling the relevant microwell and the target molecule.

In the second embodiment, the example in which the detection unit 903 includes the image acquisition unit 903a and the target molecule is detected through use of the image of the microwell acquired by the image acquisition unit 903a has been described, but the detection method in the detection step is not limited thereto. That is, it is not required for the detection unit 903 to include the image acquisition unit 903a, and further, an appropriate detection apparatus can be used as the detection unit 903 in accordance with a mechanism adopted to detect the target molecule.

The present disclosure is also implemented by executing the following processing. Specifically, software (program) for implementing the functions of the above-mentioned embodiments by causing a computer (or CPU, MPU, or the like) to execute the software (program) is supplied to a system or an apparatus via a network or various kinds of storage media. Then, the computer (or CPU, MPU, or the like) of the system or the apparatus reads out the program to execute the program. Further, the present disclosure may be implemented by, for example, a circuit (for example, ASIC) that implements one or more of the functions.

All of the above-mentioned embodiments merely describe embodied examples for carrying out the filling method and the detection method according to the present disclosure, and hence the technical scope of the present disclosure should not be interpreted in a limited way based on the above-mentioned embodiments. In other words, the present disclosure can be carried out in various forms without departing from the technical ideas or the main features thereof. It should be understood that, for example, an embodiment in which part of the configuration of any of the embodiments is added to another embodiment or is replaced with part of the configuration of another embodiment is also an embodiment to which the present disclosure can be applied.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

**Claims**

1. A filling method for filling a microwell (404) with a target-capturing substance, the filling method comprising:

   a capturing substance information acquisition step of acquiring capturing substance information relating to a target-capturing substance to be used;
   a speed determination step of determining, based on the capturing substance information acquired in the capturing substance information acquisition step, an introduction speed at which a dispersion medium in which the target-capturing substance is dispersed is introduced to a region on a base material in which a plurality of the microwells (404) are formed, the region including the plurality of the microwells (404) formed therein; and
   a capturing substance filling step of filling one or more of the plurality of the microwells (404) with the target-capturing substance by introducing the dispersion medium to the base material at the introduction speed.

2. The filling method according to claim 1, wherein the capturing substance information includes substance characteristic information relating to a characteristic that affects the introduction speed.

3. The filling method according to claim 1 or 2, wherein the capturing substance information includes specification information for specifying a substance that is at least any one of the target-capturing substance or the dispersion medium.

4. The filling method according to any one of claims 1 to 3, further comprising a correspondence information acquisition step of acquiring correspondence information relating to a correspondence relationship between the capturing substance information about one or more target-capturing substances including the target-capturing substance to be used and speed index information relating to an index for determining the introduction speed, wherein the speed determination step includes determining the introduction speed through use of the correspondence information.

5. The filling method according to claim 4, wherein the speed index information includes a recommended value about the introduction speed.

6. The filling method according to any one of claims 1 to 5, wherein the target-capturing substance is a particle having a particle diameter of 1 $\mu$m or more and 10 $\mu$m or less.

7. The filling method according to any one of claims 1 to 6, wherein the microwell has a volume of 0.1 fL or more and 1,000 fL or less.

8. A detection method comprising:

   a target capturing step of causing the target-capturing substance to capture a target molecule in the dispersion medium;
   a target filling step of filling, by the filling method of any one of claims 1 to 7, the microwell (404) with the target-capturing substance; and
   a detection step of detecting the target molecule based on a signal emitted through use of the target-capturing substance that has captured the target molecule.

9. The detection method according to claim 8, wherein the detection step includes an image acquisition step of acquiring an image obtained by photographing a plurality of the microwells.

10. The detection method according to claim 9, wherein the image is an image that is at least any one of a bright-field image or a fluorescent image.

11. A filling system (10) for filling a microwell (404) with a target-capturing substance, the filling system comprising:

    a capturing substance information acquisition unit (101) configured to acquire capturing substance information relating to a target-capturing substance to be used;
    a speed determination unit (102) configured to determine, based on the capturing substance information acquired by the capturing substance information acquisition unit, an introduction speed at which a dispersion medium in which the target-capturing substance is dispersed is introduced to a region on a base material in which a plurality of the microwells (404) are formed, the region including the plurality of the microwells (404) formed therein; and a capturing substance filling unit (103) configured to fill one or more of the plurality of the microwells (404) with the target-capturing substance by introducing the dispersion medium to the base material at the introduction speed.

12. A detection system (90) comprising:

the filling system of claim 11; and
a detection unit (903) configured to detect a target molecule based on a signal emitted through use of the target-capturing substance that has captured the target molecule.

13. The detection system (90) according to claim 12, wherein the detection unit includes an image acquisition unit (903a) configured to acquire an image obtained by photographing a plurality of the microwells.

14. The detection system (90) according to claim 13, wherein the image is an image that is at least any one of a bright-field image or a fluorescent image.

# FIG. 1

10

101
CAPTURING SUBSTANCE
INFORMATION ACQUISITION UNIT

104
INPUT UNIT

102
SPEED DETERMINATION
UNIT

105
OUTPUT UNIT

103
CAPTURING SUBSTANCE
FILLING UNIT

106
STORAGE UNIT

# FIG. 2

START

S201 → ACQUIRE CAPTURING
SUBSTANCE INFORMATION

S202 → DETERMINE INTRODUCTION SPEED

S203 → FILL MICROWELL WITH
TARGET-CAPTURING SUBSTANCE

END

# FIG. 3

10

30

31

FILLING DEVICE

301 — CPU

305 — COMMUNICATION I/F

302 — RAM

306 — OUTPUT DEVICE

303 — ROM

307 — INPUT DEVICE

304 — HDD

# FIG. 4

400

# FIG. 5

10

101
CAPTURING SUBSTANCE INFORMATION ACQUISITION UNIT

104
INPUT UNIT

501
CORRESPONDENCE INFORMATION ACQUISITION UNIT

105
OUTPUT UNIT

102
SPEED DETERMINATION UNIT

106
STORAGE UNIT

103
CAPTURING SUBSTANCE FILLING UNIT

# FIG. 6

```
            START

S201    ACQUIRE CAPTURING
        SUBSTANCE INFORMATION

S601    ACQUIRE CORRESPONDENCE
        INFORMATION

S202    DETERMINE INTRODUCTION SPEED

S203    FILL MICROWELL WITH
        TARGET-CAPTURING SUBSTANCE

            END
```

# FIG. 7

10

| | |
|---|---|
| 101 **CAPTURING SUBSTANCE INFORMATION ACQUISITION UNIT** | 104 **INPUT UNIT** |
| 701 **MODEL ACQUISITION UNIT** | 105 **OUTPUT UNIT** |
| 102 **SPEED DETERMINATION UNIT** | 106 **STORAGE UNIT** |
| 103 **CAPTURING SUBSTANCE FILLING UNIT** | |

# FIG. 8

```
        ┌──────────────┐
        │    START     │
        └──────┬───────┘
               │
               ▼
   ┌─────────────────────────┐
S201│   ACQUIRE CAPTURING     │
   │  SUBSTANCE INFORMATION  │
   └───────────┬─────────────┘
               │
               ▼
   ┌─────────────────────────┐
S801│   ACQUIRE LEARNED MODEL │
   └───────────┬─────────────┘
               │
               ▼
   ┌─────────────────────────┐
S202│ DETERMINE INTRODUCTION  │
   │          SPEED          │
   └───────────┬─────────────┘
               │
               ▼
   ┌─────────────────────────┐
S203│   FILL MICROWELL WITH   │
   │ TARGET-CAPTURING SUBSTANCE│
   └───────────┬─────────────┘
               │
               ▼
        ┌──────────────┐
        │     END      │
        └──────────────┘
```

# FIG. 9

90

| TARGET CAPTURING UNIT | 901 | | INPUT UNIT | 104 |

TARGET CAPTURING UNIT — 901

INPUT UNIT — 104

TARGET FILLING UNIT — 902

OUTPUT UNIT — 105

DETECTION UNIT — 903

IMAGE ACQUISITION UNIT — 903a

STORAGE UNIT — 106

# FIG. 10

START

S1001 — CAPTURE TARGET MOLECULE

S1002 — FILL MICROWELL WITH
TARGET-CAPTURING SUBSTANCE

S1003 — DETECT TARGET MOLECULE

END

FIG. 11

Europäisches
Patentamt

European
Patent Office

Office européen
des brevets

# EUROPEAN SEARCH REPORT

**Application Number**

EP 25 18 2617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/299672 A1 (SPUHLER PHILIPP [US] ET AL) 24 September 2020 (2020-09-24) * paragraph [0159] * * paragraph [0248] - paragraph [0402] * ----- | 1-14 | INV. B01L3/00 |
| E | JP 2025 143198 A (CANON INC.) 1 October 2025 (2025-10-01) * the whole document * ----- | 1-14 | |
| A | US 2023/295689 A1 (MINAMI MASATO [JP] ET AL) 21 September 2023 (2023-09-21) * the whole document * ----- | 1-14 | |

**TECHNICAL FIELDS SEARCHED (IPC)**

B01L

The present search report has been drawn up for all claims

| Place of search | Date of completion of the search | Examiner |
|---|---|---|
| The Hague | 5 November 2025 | Ueberfeld, Jörn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 2617

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | | Publication date | Patent family member(s) | | Publication date |
|---|---|---|---|---|---|
| US 2020299672 | A1 | 24-09-2020 | CN | 113557090 A | 26-10-2021 |
| | | | EP | 3941630 A1 | 26-01-2022 |
| | | | US | 2020299672 A1 | 24-09-2020 |
| | | | US | 2024263165 A1 | 08-08-2024 |
| | | | WO | 2020190454 A1 | 24-09-2020 |
| JP 2025143198 | A | 01-10-2025 | NONE | | |
| US 2023295689 | A1 | 21-09-2023 | CN | 116391023 A | 04-07-2023 |
| | | | JP | WO2022080343 A1 | 21-04-2022 |
| | | | US | 2023295689 A1 | 21-09-2023 |
| | | | WO | 2022080343 A1 | 21-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012556164 A